Europäisches Patentamt

European Patent Office

Office européen des brevets

(19)

(11) Veröffentlichungsnummer : **0 192 613**
**B1**

(12) # EUROPÄISCHE PATENTSCHRIFT

(45) Veröffentlichungstag der Patentschrift :
**11.10.89**

(51) Int. Cl.⁴ : **B 65 G 49/00**

(21) Anmeldenummer : **86810090.0**

(22) Anmeldetag : **19.02.86**

(54) **Vorrichtung zum Halten und Transportieren von Formteilen, insbesondere von Karosserieblechen in der Fahrzeugindustrie.**

(30) Priorität : **20.02.85 DE 3505838**

(43) Veröffentlichungstag der Anmeldung :
**27.08.86 Patentblatt 86/35**

(45) Bekanntmachung des Hinweises auf die Patenterteilung : **11.10.89 Patentblatt 89/41**

(84) Benannte Vertragsstaaten :
**AT BE CH DE FR GB IT LI LU NL SE**

(56) Entgegenhaltungen :
**DE-C- 2 930 053**

(73) Patentinhaber : **SCHWEIZERISCHE ALUMINIUM AG**

**CH-3965 Chippis (CH)**

(72) Erfinder : **Kemen, Hans-Jörgen**
**Krähenburgstrasse 18**
**D-7700 Singen (DE)**

EP 0 192 613 B1

## Beschreibung

Die Erfindung betrifft eine Vorrichtung zum Halten und Transportieren von Formteilen, insbesondere von Karosserie-blechen in der Fahrzeugindustrie, mit an einer Tragsäule übereinander vorgesehenen Konsolenarmen, die jeweils von einer etwa horizontalen Schwenkachse durchsetzt sowie um diese aus einer Ruhelage in eine Tragstellung schwenkbar sind, in welchersie einem in Abstand zur Schwenkachse vorgesehenen Anschlag, insbesondere einem bolzenartigen Anschlag, anliegen.

Eine solche Vorrichtung besteht aus wenigstens einem Paar von Tragsäulen auf einem mit Rollen versehenen Fahrsockel. Zur Aufnahme der Karosseriebleche werden jeweils zwei in einer Ebene liegende Konsolenarme der Tragsäulen aus dieser herausgeklappt und können so jenes Karosserieblech aufnehmen, über dem dann ein weiteres auf benachbarten Konsolenarmen abgestützt werden kann. Die Konsolenarme einer Tragsäule sind in Abständen Übereinander angebracht, welchletztere von der Form der Montageteile bestimmt sind und deren Anzahl die Aufnahmekapazität der Vorrichtung bestimmt.

Bei einer Tragsäule dieser Art ragen gemäß DE-C2 29 30 053 die Konsolenarme von plattenartigen Führungskörpern ab, deren jeder ein in Draufsicht gekrümmtes Langloch zur Führung der bolzenförmigen Schwenkachse aufweist und in Tragstellung mit einer Körperkante dem Anschlag aufliegt; von letzterem wird der beim Verschwenken des oberhalb benachbarten Konsolenarmes durch diesen abgehoben und in Ruhelage überführt. In dieser wird dann die Einbaueinheit Konsolenarm/Führungskörper durch einen anderen Anschlag einerseits sowie den Druck des unterhalb benachbarten Konsolenarmes fixiert.

Als Nachteil der bisher eingesetzten Vorrichtungen hat sich gezeigt, daß die Konsolenarme — und damit die auflastenden Formteile — bereits bei geringen Unebenheiten des Fahrgrundes aus ihren Tragstellungen herausschwingen, was zumindest zu einem Verrutschen der Last führen kann; oftmals kommt es so zu erheblichen Betriebsstörungen.

Angesichts dieser Gegebenheiten hat sich der Erfinder das Ziel gesetzt, eine Vorrichtung der eingangs erwähnten Art so zu verbessern, daß die Formteile während des Transportes auf dann fixierten Konsolenarmen ruhen und letztere so lange eingerastet bleiben, bis die auflastenden Formteile wieder entnommen sind. Zudem sollen die Konsolenarme auch ohne Last stabil fesgelegt sein.

Zur Lösung dieser Aufgabe führt eine Vorrichtung gemäss dem Wortlaut von Anspruch 1.

Vorteilhafterweise übergreift der nicht angelenkte Schenkel der Haltefeder dieser Arretiereinrichtung in der Tragstellung die tragende Oberfläche des Konsolenarmes und lastet einem gegebenenfalls darauf ruhenden Montageteil auf, um dieses selbst zusätzlich zu fixieren.

Als günstig hat es sich dazu erwiesen, die Arretiereinrichtung beim Ueberführen des Konsolenarmes in dessen Tragstellung selbsttätig in ihre Verriegelungsstellung zu bringen, aus der sie kurz vor Entnahme des Formteils wieder zurückgeführt werden kann.

Die Arretiereinrichtung weist eine Anschlagkante auf, welche in Verriegelungsstellung des Konsolenarmes einem an diesem vorgesehenen Gegenanschlag anliegt, bevorzugt an einer vom Konsolenarm zu dessen tragender Oberfläche rechtwinkeligen Anschlagfläche. Dabei soll jene Anschlagkante der Arretiereinrichtung an einem der Tragsäule verschiebbaren Riegelsteg vorgesehen sein, insbesondere von einer von dessen Schmalseiten gebildet werden.

Die Anschlagfläche ist bevorzugt mit dem Konsolenarm einstückig gefertigt, beispielsweise an der Außenseite eines Achslagers für einen in der Schwenkachse liegenden Achsbolzen gebildet.

Im Rahmen der Erfindung liegt ein Paar von Riegelstegen mit zwei diesen zugeordneten Anschlagflächen beidseits eines zwischen den Riegelstegen angeordneten scheibenartigen Führungskörpers des Konsolenarms.

Der Riegelsteg verläuft erfindungsgemäß zwischen den Achsbolzen einerseits und einem dazu parallelen Führungsstift der Tragsäule anderseits, der einen um den Achsbolzen gekrümmten Kulissenschlitz des Führungskörpers durchsetzt. Dieser Führungsstift gewährleistet in Zusammenwirken mit dem Kulissenschlitz ein geführtes Verschwenken des Führungskörpers um jenen Achsbolzen in einem Winkel von bevorzugt 90°; der an der Tragsäule festliegende Führungsstift schlägt in der Ruhelage des Konsolenarms einerseits und in dessen Tragstellung anderseits an jeweils ein Ende des Kulissenschlitzes an.

Erfindungsgemäß ist der Riegelsteg in einer Kulisse so geführt, daß er in seine Verriegelungsstellung sowohl in Richtung auf den Achsbolzen zuführbar als auch absenkbar ist. Hierzu ist an der Tragsäule parallel zum Riegelsteg ein Schenkel eines Einbauprofils angebracht, welcher einen i. w. parallel zur Säulenachse verlaufenden Führungsschlitz mit zum Achsbolzen gerichteter Gleitstufung für einen Hutbolzen oder einen entsprechenden Teil des Riegelsteges aufweist; in Entriegelungsstellung ist der Hutbolzen am oberen Ende des Führungsschlitzes angeordnet und wird in diesem beim Absenken über die genannte Gleitstufung nach außen in einen erfindungsgemäß an diese anschließenden Endteil des Führungsschlitzes geführt in diesem Endteil sitzt der Hutbolzen des Riegelsteges zeitweise fest, wobei in dieser Stellung die Anschlagkante des Riegelsteges den Gegenanschlägen der Konsolenarme anliegt und diese gegen jegliche Bewegung sperrt.

Nach weiteren bevorzugten Merkmalen der Erfindung ist jener Schenkel des Einbauprofils in Abstand zu einer benachbarten Seitenwand der bevorzugt als U-förmiges Profil ausgebildeten Tragsäule angebracht und/oder, von einem Führungsstift für einen der Führungskörper durchsetzt; bei einer Tragsäule von etwa 200 cm Länge genügen bereits drei derartige Einbauprofile, um den vertikalen Riegelsteg ausreichend zu führen.

Der Riegelsteg ist vorteilhafterweise zumindest an seinem oberen Ende mit einem von ihm abragenden Riegelnocken versehen, an dem ein Kraftspeicher angreift, bevorzugt eine Feder mit wenigstens einem Federarm, der an einem Festpunkt der Tragsäule, insbesondere an einem der Führungsstifte, festgelegt ist. Dieser Kraftspeicher bzw. diese Feder nimmt auf ihrem Federweg um jenen Festpunkt den Riegelnocken mit und veranlaßt so die Bewegung des Riegelsteges, u. a. das Einführen des Riegelnockens in eine die Verriegelungsstellung fixierende Randausnehmung des benachbarten Führungskörpers. Diese, Stellung des Riegelnockens dient zum einen zum zeitweiligen Fixieren des Riegelsteges in seiner Verriegelungsstellung, darüber hinaus jedoch auch zur zusätzlichen Festlegung des betroffenen Führungskörpers, der dann dank des Gegenanschlages seines Konsolenarmes von der Schmalseite des Riegelsteges einerseits und zusätzlich vom in jene Randausnehmung eingerasteten Riegelnocken anderseits gehalten wird.

Das erfindungsgemäße Federelement zeichnet sich in einer bevorzugten Ausführung dadurch aus, daß an den i. w. über eine vertikale Achse oberhalb des Festpunktes schwenkbaren Federarm — der also in unterschiedlichen Stellungen jeweils an einer anderen Seite der vertikalen Achse verläuft — ein in Seitenansicht U-förmiger Federabschnitt anschließt, dessen anderer Arm Teil eines in Draufsicht U-förmigen Federbügels ist, dessen Mittelachse eine Symmetrieachse bildet; dieser Federbügel verbindet also zwei gleichförmige Federteile, die zwischen sich einen Formkörper einschließen und jeweils an einen Riegelsteg angreifen. Diese Ausführung gewährleistet eine ausgeglichene Belastung an beiden Seitenwänden der Tragsäule.

Es wurde bereits erwähnt, daß die Arretiereinrichtung, welche das beschriebene Federelement enthält, ein auf der Oberfläche des Konsolenarm ruhendes Montageteil übergreift und diesem haltend auflastet. Dies wird durch den in Seitenansicht U-förmigen Federabschnitt erreicht, der in Verriegelungsstellung der Vorrichtung seitlich von der Tragsäule abkragt und den benachbarten Konsolenarm übergreift. Dabei hat es sich als günstig erwiesen, den auskragenden Federabschnitt mit einem zur Tragsäule geneigten Federstück zu versehen, was eine bessere Anpassung an die Dicke des zu erfassenden Montageteils erlaubt.

Das erfindungsgemäße Federelement wird aus einer Ruhelage, in welcher jener Federarm in einer vom Konsolenarm weggerichteten Neigungslage steht, in die Verriegelungsstellung geschwenkt, wobei der Federarm in bereits erörterter Weise die Vertikalachse überfährt. Zur Durchführung dieser Bewegung ist erfindungsgemäß ein Schwenkhebel hilfreich, welcher um einen anderen Festpunkt der Tragsäule geschwenkt werden kann bevorzugt um den Führungsstift des unterhalb nachfolgenden nächsten Führungskörpers.

Der Schwenkhebel ist der Bewegungsbahn eines Anschlagstiftes des Führungskörpers benachbart und eine Innenkante des Schwenkhebels als Anschlag für den Anschlagstift ausgebildet.

Der Schwenkhebel ist in Seitenansicht bevorzugt L-förmig, wobei sein kurzer Schenkel mit dem Federelement verbunden ist. Dieser kurze Schenkel verbindet im übrigen zwei lange Schenkel des Schwenkhebels, da dieser bevorzugt mit seinen zwei langen Schenkeln beidseits des Führungskörpers angelenkt sein soll.

Das Federelement wird vom Schwenkhebel in seiner Verriegelungsstellung gehalten, in welcher dessen lange/r Schenkel dem Anschlagstift des in Tragstellung befindlichen Konsolenarmes bzw. des entsprechenden Führungskörpers anliegt/anliegen. Das Federelement wird mit dem Schwenkhebel von dem in seiner Bewegungsbahn geführten Anschlagstift aus der Verriegelungsstellung herausgedrückt.

Nach einem weiteren bevorzugten Merkmal der Erfindung weisen Schwenkhebel bzw. Federbügel/Anschlagelemente auf, die in Ruhelage der Verriegelungseinrichtung einer Anschlagfläche der Tragsäule anliegen, bevorzugt der Rückwand des die Tragsäule bildenden Rinnenprofils.

Die jeweils mit einem Konsolenarm ausgestatteten Führungskörper sind in der Tragsäule so an jenen Achsbolzen gelagert, daß der Umfang des einen Führungskörpers in die Bewegungsbahn des benachbarten Führungskörpers einragt. Die Außenkontur der Führungskörper ist so gestaltet, daß bei der Schwenkbewegung des untersten Führungskörpers dieser nach einem Schwenkbereich in einem spitzen Winkel an den darüberliegenden Führungskörper herangeführt ist und dessen Schwenkbewegung beginnen läßt. Es ergibt sich eine fortlaufende Bewegung, d. h. eine erfindungsgemäß selbsttätige Überführung der Konsolenarme in deren Tagstellungen, wobei nach dem Überführen des obersten Konsolenarmes der Tragsäule der Verriegelungsvorgang durchgeführt wird; lediglich dem obersten Führungskörper ist das beschriebene Federelement zugeordnet. Selbstverständlich liegt es im Rahmen der Erfindung, auch einzelne Führungskörper mit der Verriegelungseinrichtung zu versehen, falls dies für erforderlich erachtet wird.

Insgesamt führt die Erfindung zu einer sehr stabilen Tragvorrichtung vor allem für Karosseriebleche, welche während des Transportes auf der Tragvorrichtung sicher gelagert sind.

Weitere Vorteile, Merkmale und Einzelheiten der Erfindung ergeben sich aus der nachfolgenden Bechreibung bevorzugter Ausführungsbeispiele sowie anhand der Zeichnung; diese zeigt in

Fig. 1 : eine geschnittene Schrägsicht auf einen Teil einer Tragsäule mit ausgeklapptem Konsolenarm an einem scheibenförmigen Führungskörper ;

Fig. 2 : den schematisierten Schnitt durch zwei Tragsäulen mit zwischen ihnen vorgesehenem Werkstück ;

Fig. 3 : einen vergrößerten Ausschnitt aus Fig. 1 mit Konsolenarmen in Ruhelage ;

Fig. 4 : den Schnitt durch Fig. 3 nach deren Linie IV-IV ;

Fig. 5 : die Darstellung nach Fig. 3 mit in Tragstellung überführten Konsolenarmen ;

Fig. 6 : einen gegenüber Fig. 2 vergrößerten Schnitt nach deren Linie VI-VI ;

Fig. 7 : die Seitenansicht eines Details aus Fig. 2 bis 6 ;

Fig. 8 : die Draufsicht auf Fig. 7 ;

Fig. 9 : eine Seitenansicht des Details der Fig. 7, 8 ;

Fig. 10 : eine Seitenansicht eines weiteren Details aus Fig. 2 bis 6 ;

Fig. 11 : den Schnitt durch Fig. 10 nach deren Linie XI-XI ;

Fig. 12 : eine Schrägsicht auf ein gegenüber Fig. 3, vergrößertes Detail daraus ;

Fig. 13 : eine Seitenansicht eines Führungskörpers mit Konsolenarm in etwa natürlicher Größe ;

Fig. 14 : einen Schnitt durch Fig. 13 nach deren Linie XIV-XIV.

Zwischen einem Paar von — auf einem aus Gründen der Uebersichtlichkeit nicht wiedergegebenen gemeinsamen Fahrsockel festliegenden — Tragsäulen 10 ruhen Montageteile, bevorzugt Karosseriebleche 11, in Abständen a zueinander auf von den Tragsäulen 10 abragenden Konsolenarmen 12 und können so gestapelt transportiert sowie einem Fertigungsautomaten zugeführt werden. Jeder Konsolenarm 12 ragt von einem scheibenartigen Führungskörper 13 ab, der von einem Achsbolzen 14 zwischen den Seitenschenkeln 15 eines aus Leichtmetall stranggepreßten U-Profils 16 gehalten ist.

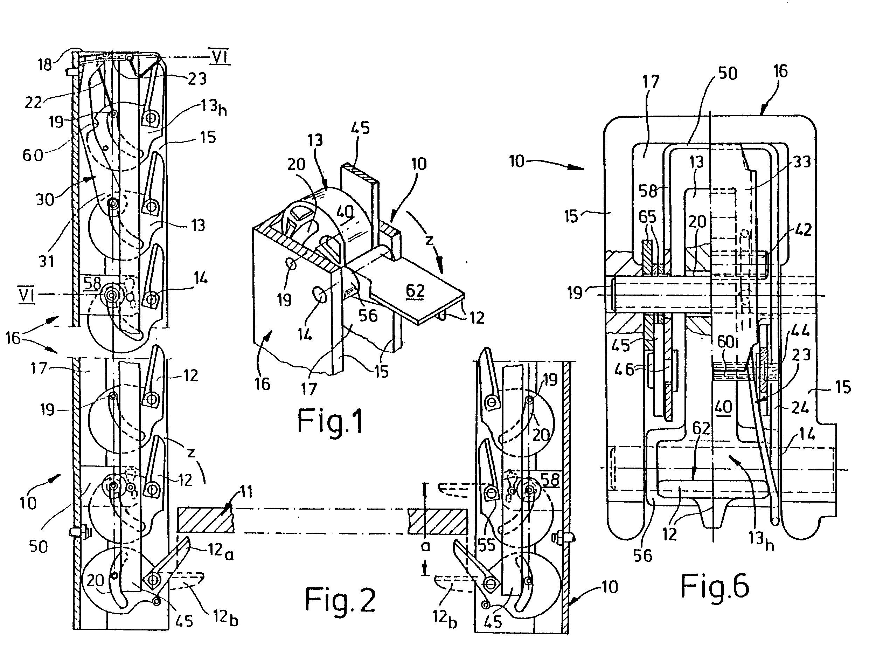

In Fig. 2 ist das dem dort dargestellten Karosserieblech 11 zugeordnete aufnahmebereite Paar horizontal ausgeklappter Konsolenarme als gestrichelte Kontur 12b angedeutet ; die Konsolenarme 12 sind in einer Ruhelage im Innenraum 17 des U-Profils 16 angeordnet und aus dem Innenraum 17 um jenen Achsbolzen 14 in Pfeilrichtung z in eine geneigte Zwischenstellung $12_a$ herausführbar, aus der sie von einem auflastenden Karosserieblech 11 od. dgl. in die horizontale Tragstellung $12_b$ geführt werden.

Zum Achsbolzen 14 höhen- und seitenversetzt ist im U-Profil 16 ein Führungsstift 19 festgelegt, der einen um den Achsbolzen 14 gekrümmten Kulissenschlitz 20 im scheibenförmigen Führungskörper 13 durchgreift und an jeweils einem von dessen Schlitzenden einerseits in Ruhelage sowie andererseits in Tragstellung $12_b$ des Konsolenarmes 12 anschlägt.

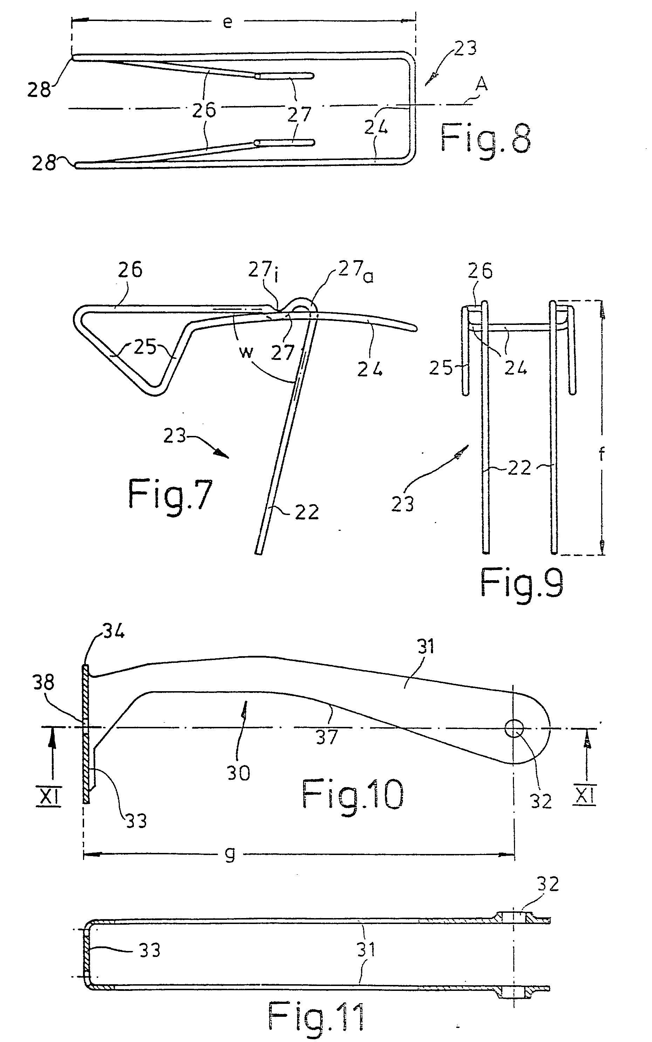

Der in Fig. 2 links oben erkennbare, einer oberen Profilkante 18 zugeordnete Führungsstift 19 hält freie Enden zweier Federarme 22 einer Haltefeder 23 als Teil einer Verriegelungseinrichtung für den obersten Führungskörper $13_h$. Die Haltefeder 23 besteht gemäß Fig. 7 bis 9 aus einem U-artigen Federbügel 24 einer beispielsweisen Länge e von 80 mm, dessen leicht gekrümmte freie Enden — nach Bildung jeweils zweier Seiten 25 eines Dreiecks mit abwärts weisender Spitze — in Firstarme 26 übergehen ; letztere laufen gemäß Fig. 9 zur Achse A der Haltefeder 23 einwärts bis zu jeweils einem S-förmigen Federteil 27, an dem jener Federarm 22 einer Gesamtlänge f von etwa 70 mm anschließt, der zum Firstarm 26 in einem Neigungswinkel w von 80° steht.

Ein anderer Teil der Verriegelungseinrichtung wird von einem — in Seitenansicht der Fig. 10 L-förmigen — Schwenkhebel 30 mit zwei parallelen sowie eine Achsbohrung 32 enthaltenden langen Schenkeln 31 gebildet, die vom Führungsstift 19 des benachbarten Führungskörpers 13 als Gelenkachse durchsetzt sind. Die langen Schenkel 31 sind durch einen gemeinsamen kurzen Schenkel 33 verbunden, der zu seiner Gelenkachse in einem Achsabstand g von beispielsweise 148 mm verläuft sowie den Firstarm 26 jener Haltefeder 23 übergreift. In Ruhelage des obersten Konsolenarmes 12 liegt der kurze Schenkel 33 des Schwenkhebels 30 mit einer hinteren Anschlagkante 34 der Innenseite 35 oder Profilrückwand an. Ebenfalls ruhen dann Anschlagenden 28 des Federbügels 24 an jener Innenseite 35.

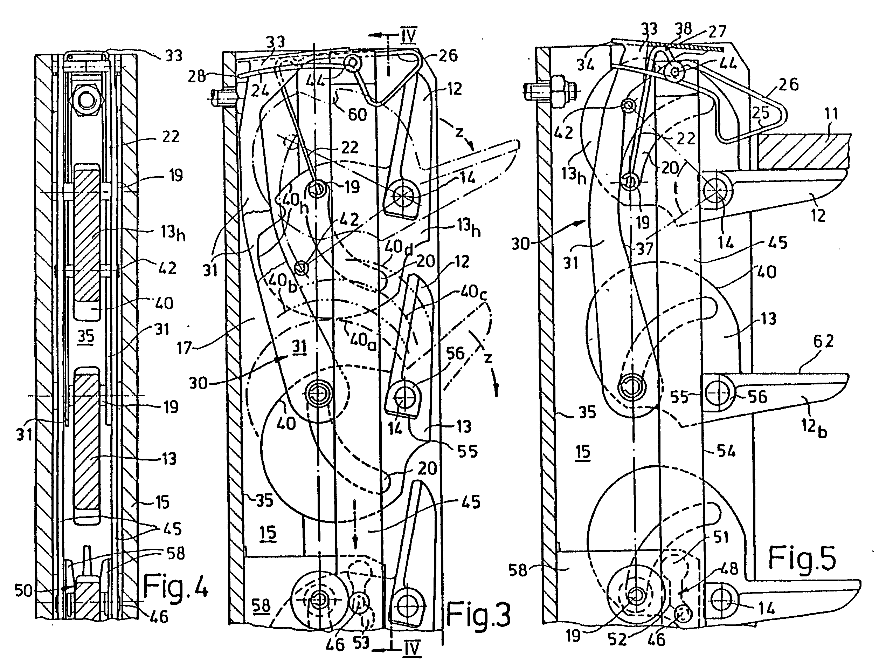

In Fig. 3 verdeutlichen strichpunktierte Konturen $40_a$ bis $40_d$ oberhalb des dort mittleren Führungskörpers 13, daß dessen Umfangsfläche 40 bei ihrem Weg z um den Achsbolzen 14 in die Tragstellung $12_b$ ihres Konsolenarmes 12 die oberhalb benachbarte Umfangsfläche $40_h$ des Führungskörpers $13_h$ berührt und abrollend anhebt, so daß letzterer sich ebenfalls in Pfeilrichtung z bewegt, bis er von einem auflastenden Karosserieblech 11 mitgenommen werden kann.

Mit dem Führungskörper $13_h$ wandert ein Federstift 42 im Bereich eines Winkels t von 80° um den Achsbolzen 14 und zwar an den Innenkanten 37 der langen Hebelschenkel 31 entlang. Der Schwenkhebel 30 wird dabei von der Haltefeder 33 bzw. von deren S-förmigen Federteilen 27 mitgenommen, deren jeweils äußerer Krümmungsbereich $27_a$ (Fig. 7) in eine Ausnehmung 38 des kurzen Hebelschenkels 33 eingreift. Die Haltefeder 30 wird vom Federstift 42 auf seinem beschriebenen Weg mitgeführt, wobei der innere Krümmungsbereich $27_i$ zu — zwischen ihn und den Federbügel 24 beidseits fluchtend einragenden — Riegelnocken 44 eines Paares von Riegelstegen 45 gelangt. Jeder Riegelsteg 45 verläuft vertikal verschieblich parallel zum Seitenschenkel 15 des U-Profils 16 und ist mit einem Hubbolzen 46 versehen.

Dieser läuft in einem Kulissenschlitz 48 eines querschnittlich U-förmigen Einbauprofils 50, der unterhalb einer Einführaufweitung 51 für jenen Hubbolzen 46 eine auswärts weisende Führungsstufe 52 anbietet ; letztere zwingt jenen Hubbolzen 46 — und dadurch den Riegelsteg 45 — beim Absenken in ein gegen den Achsbolzen 14 versetztes Schlitzende 53. Ist der Hubbolzen 46 darin angekommen, liegen die äußeren Stegkanten 54 der Riegelstege 45 Anschlagflächen 55 seitlicher Anformungen 56 der Führungskörper 13 an; diese sind nun in ihrer Tragstellung fixiert und aus ihr erst dann lösbar, wenn die Riegelstege 45 in Richtung auf jene Innenseite zurückgeführt werden.

In der in Fig. 5 gezeigten Verriegelungsstellung sitzt sowohl der beschriebene Hutbolzen 46 im Schlitzende 53 als auch der obere Riegelnocken 44 des Riegelsteges 45 in einer Randausnehmung 60 des Führungskörpers $13_h$; die Haltefeder 23 ist zwischen Riegelnocken 44 sowie Schwenkhebel 30 eingespannt, und ein Paar der Seiten 25 des genannten Federdreiecks steht — nach außen aufwärts geneigt — in einem Abstand zur Oberfläche 62, gegen welche jene Seiten 25 ein aufgelegtes Karosserieblech 11 od. dgl. federnd drücken, bis ein Verschieben des Schwenkhebels 30 zur Innenseite 35 des U-Profils 16 hin die Arretierstellung beendet.

Das Einbauprofil 50 ragt von der Innenseite 35 des U-Profils 16 ab, zu dessen Seitenschenkeln 15 die von einem der Führungsstifte 19 durchsetzten Schenkel 58 des Einbauprofils 50 in Abstand stehen. Dies wird in Fig. 6 beispielhaft durch Distanzscheiben 65 gewährleistet.

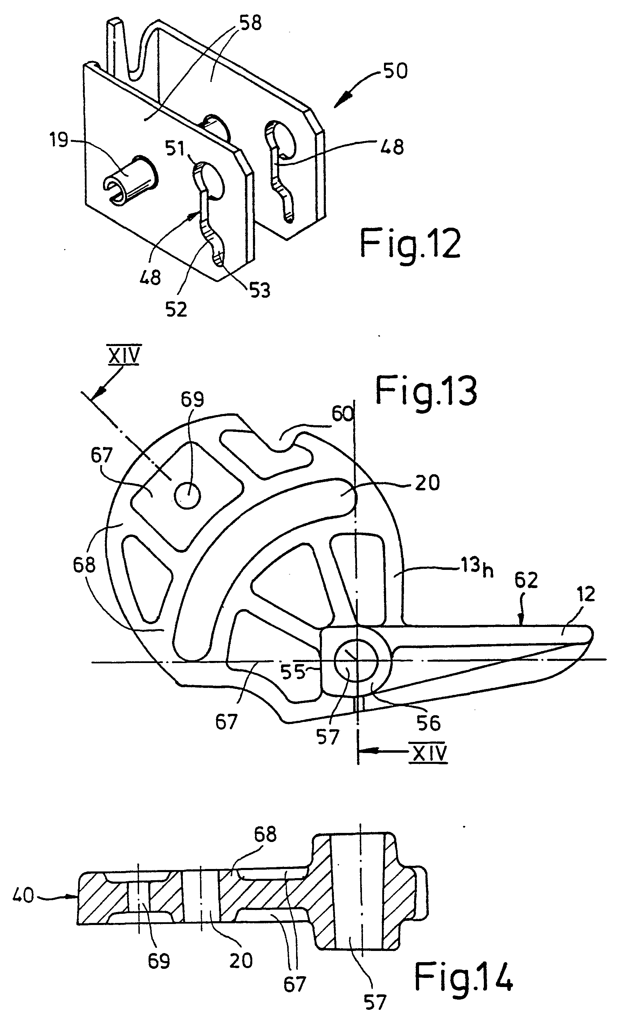

Gemäß Fig. 13, 14 ist der Führungskörper $13_h$ mit seinem Konsolenarm 12 aus Leichtmetall auf dem Wege des Druckgießens hergestellt und zur Gewichtsminderung mit eingeformten Feldern 67 ausgestattet, welche von Rahmenteilen 68 umgeben sind. Im Führungskörper $13_h$ sind zudem ein bohrungsähnliches Achsloch 57 für den Achsbolzen 14 sowie eine zylindrische Ausnehmung 69 für den Federstift 42 zu erkennen.

**Patentansprüche**

1. Vorrichtung zum Halten und Transportieren von Formteilen (11), insbesondere von Karosserieblechen in der Fahrzeugindustrie, mit an einer Tragsäule (10) übereinander vorgesehenen Konsolenarmen (12) von Führungskörpern (13, $13_h$), die jeweils von einer etwa horizontalen Schwenkachse (14) durchgesetzt und deren Konsolenarme um letztere aus einer Ruhelage in eine Tragstellung schwenkbar sind, in welcher ihre Führungskörper einem im Abstand zur Schwenkachse vorgesehenen Anschlag (19), insbesondere einem bolzenartigen Anschlag, anliegen, dadurch gekennzeichnet, dass die scheibenartigen Führungskörper (13) jeweils eine Anschlagskante aufweisen, die in der Verriegelungsstellung als Gegenanschlag (55) für die anlegbare Kante (54) eines in etwa radialer Richtung zur Schwenkachse (14) begrenzt bewegbar angebrachten, den Teil einer Arretierungseinrichtung bildenden Riegelstegs (45) dient, und dass eine dem Riegelsteg (45) einends angelenkte, den Teil einer Arretierungseinrichtung bildende Haltefeder (23) zugeordnet ist, die beim Drehen des ihr benachbarten Führungskörpers (13, $13_h$) um die Schwenkachse (14) mitnehmbar ist, wobei der Riegelsteg (45) in seine Verriegelungsstellung führbar ist.

2. Vorrichtung nach Anspruch 1, dadurch gekennzeichnet, dass Arme (25, 26) der Haltefeder (23) in Tragstellung des Konsolenarmes (12) dessen tragende Oberfläche (62) übergreifen sowie einem gegebenenfalls darauf ruhenden Montageteil (11) auflasten (Fig. 5).

3. Vorrichtung nach Anspruch 1 oder 2, dadurch gekennzeichnet, dass der Haltefeder (23) ein Schwenkhebel (30) zugeordnet ist, der um eine Gelenkachse bevorzugt um einen den Anschlag bildenden Führungsstift (19) für den Führungskörper (13) führbar ist und der mit der Haltefeder (23) verbunden ist, dass die Haltefeder (23) mit wenigstens einem Federarm (22) versehen ist, der an einer weiteren Schwenkstelle der Tragsäule (10) bevorzugt an dem Führungsstift (19) oberhalb der Gelenkachse des Schwenkhebels (30) festliegt, dass an den schwenkbaren Federarm (22) ein in Seitenansicht U-förmiger Federabschnitt anschliesst, dessen anderer Teil ein in Draufsicht U-förmiger Federbügel (24) ist, wobei die Mittelachse (A) des Federbügels (24) Symmetrieachse der Haltefeder (23) ist, und dass der in Seitenansicht U-förmige Federabschnitt den Konsolenarm (12) in dessen Tragstellung übergreift und einen zur Tragsäule (10) geneigten Seitenarm (25) aufweist.

4. Vorrichtung nach einem der Ansprüche 1 bis 3, dadurch gekennzeichnet, dass ein Paar von Riegelstegen (45) mit den zwei zugeordneten Gegenanschlägen (55) beidseits des zwischen den Riegelstegen (45) vorgesehenen scheibenartigen Führungskörpers (13, $13_h$) des Konsolenarms (12) angeordnet ist, und dass der Riegelsteg (45) zwischen jeder Schwenkachse (14) des Konsolenarmes (12) einerseits sowie dazu parallelen Führungsstiften (19) der Tragsäule (10) andererseits verläuft, von denen jeder einen um die Schwenkachse (14) gekrümmten Kulissenschlitz (20) des Führungskörpers (13) durchsetzt.

5. Vorrichtung nach Anspruch 4, dadurch gekennzeichnet, dass die Gegenanschläge (55) für die Stegkante (54) des Riegelsteges (45) von der Aussenseite einer seitlichen Anformung (56) des in der Schwenkachse (14) liegenden Achsbolzens (14) gebildet sind.

6. Vorrichtung mit einem Führungsschlitz für den Verriegelungssteg, der in seine Verriegelungsstellung sowohl in Richtung auf den Gegenanschlag führbar als auch absenkbar ist, nach einem der Ansprüche 1 bis 5, dadurch gekennzeichnet, dass parallel zum Riegelsteg (45) ein Schenkel (58) eines Einbauprofils (50) der Tragsäule (10) verläuft, der einen i. w. parallel zur Säulenachse vorgesehenen Führungsschlitz (48) mit zur Schwenkachse (14) gerichteter Führungsstufe (52) und mit einem gegen die Schwenkachse (14) des Konsolenarmes (12) versetzten Schlitzende (53) des Führungsschlitzes (48) für einen Hutbolzen (46) des Riegelsteges (45) aufweist, wobei der Schenkel (58) des Einbauprofils (50) in Abstand zu einem benachbarten Seitenschenkel (15) der Tragsäule (10) steht und vom Führungsstift (19) für den Führungskörper (13) durchsetzt ist (Fig. 12).

7. Vorrichtung nach einem der Ansprüche 1 bis 6, dadurch gekennzeichnet, dass der Riegelsteg (45) zumindest an seinem oberen Ende einen von ihm abragenden Riegelnocken (44) trägt, an dem die Haltefeder (23) angreift, und dass der dem Riegelnocken (44) benachbarte, bevorzugt der oberste Führungskörper (13$_h$) eine Randausnehmung (60) aufweist, in welcher der Riegelnocken (44) in Verriegelungsstellung seines Verriegelungssteges (45) ruht.

8. Vorrichtung nach Anspruch 7, dadurch gekennzeichnet, dass die Haltefeder (23) wenigstens eine Ausformung mit einem inneren Krümmungsbereich (27$_i$) zur klemmenden Halterung des Riegelnockens (44) aufweist, und dass die Haltefeder (23) wenigstens eine Anformung als äusseren Krümmungsbereich (27$_a$) aufweist, welche in den Schwenkhebel (30), ggf. in eine Ausnehmung (38), eingreift, wobei die inneren und äusseren Krümmungsbereiche (27$_a$, 27$_i$) einen S-förmigen Federteil (27) bilden.

9. Vorrichtung nach einem der Ansprüche 3 bis 8, dadurch gekennzeichnet, dass der Schwenkhebel (30) der Bewegungsbahn eines Anschlagstiftes (42) des Führungskörpers, bevorzugt des obersten Führungskörpers (13$_h$) benachbart wandert und eine Anschlagkante (34) des Schwenkhebels (30) als Anschlag für den Anschlagstift (42) ausgebildet ist, wobei die Haltefeder (23) mit dem Schwenkhebel (30) von dem in seiner Bewegungsbahn bewegten Anschlagstift (42) wieder aus der Verriegelungsstellung führbar ist.

10. Vorrichtung nach einem der Ansprüche 3 bis 9, dadurch gekennzeichnet, dass der Schwenkhebel (30) in Seitenansicht L-förmig ausgebildet und sein kurzer Schenkel (33) die Haltefeder (23) hält, und dass der kurze Schenkel (33) zwei lange Schenkel (31) des querschnittlich U-förmigen Schwenkhebels (30) verbindet, wobei in der Verriegelungsstellung des Schwenkhebels (30) dessen lange/r Schenkel (31) dem Anschlagstift (42) des in Tragstellung befindlichen Konsolenarms (12) bevorzugt des obersten Konsolenarmes anliegt/anliegen.

11. Vorrichtung nach einem der Ansprüche 3 bis 10, dadurch gekennzeichnet, dass Schwenkhebel (30) bzw. Haltefeder (24) Anschlagselemente (34 bzw. 28) aufweisen, die in Ruhelage der Verriegelungseinrichtung einer der Innenseiten (35) des U-Profils (16) der Tragsäule (10) anliegen.

## Claims

1. Apparatus for holding and transporting shaped parts (11), especially vehicle body sheets in the vehicle industry, having provided superposed on a support column (10) bracket arms (12) of guide elements (13, 13$_h$) which are respectively penetrated by a somewhat horizontal pivot axis (14) and the bracket arms of which are pivotable about the latter from a rest position into a supporting position in which their guide elements abut a stop (19), particularly a boltlike stop, provided at an interval from the pivot axis, characterized in that the disclike guide elements (13) respectively exhibit a stop edge which serves in the locked position as counterstop (55) for the applicable edge (54) of a locking bar (45) attached with limited mobility in a somewhat radial direction to the pivot axis (14) and which forms part of an arresting device, and that a retaining spring (23) articulated to the locking bar (45) at one end and forming part of an arresting device is associated, which is entrainable about the pivot axis (14) during rotation of its adjacent guide element (13, 13$_h$), the locking bar (45) being guidable into its locked position.

2. Apparatus according to Claim 1, characterized in that in the supporting position of the bracket arm (12), arms (25, 26) of the retaining spring (23) overlap its supporting surface (62) and load a vehicle component (11) which may be resting on the latter (Fig. 5).

3. Apparatus according to Claim 1 or 2, characterized in that a pivot lever (30), which is associated with the retaining spring (23), is movable about a joint axis preferably about a guide pin (19), which forms the stop, for the guide element (13) and is connected to the retaining spring (23), that the retaining spring (23) is provided with at least one spring arm (22) which is fixed to a further pivot position of the support column (10) preferably to the guide pin (19) above the joint axis of the pivot lever (30), that the pivotable spring arm (22) is adjoined by a spring section U shaped in side elevation, the other part of which is a spring yoke (24) U shaped in plan view, the central axis (A) of the spring yoke (24) being the axis of symmetry of the retaining spring (23), and that the spring section U shaped in side elevation overlaps the bracket arm (12) in its supporting position and exhibits a side arm (25) inclined to the support column (10).

4. Apparatus according to one of Claims 1 to 3, characterized in that a pair of locking bars (45) with the two associated counterstops (55) is arranged on both sides of the disclike guide element (13, 13$_h$) of the bracket arm (12) provided between the locking bars (45), and that the locking bar (45) extends between each pivot axis (14) of the bracket arm (12) on the one hand and guide pins (19), parallel to the latter, of the support column (10) on the other hand, each of which penetrates a cullis slot (20), curved about the pivot axis (14), of the guide element (13).

5. Apparatus according to Claim 4, characterized in that the counterstops (55) for the bar edge (54) of the locking bar (45) are formed by the outside of a lateral shaped part (56) of the axle bolt located in the pivot axis (14).

6. Apparatus having a guide slot for the locking bar, which is guidable into its locked position both towards the counterstop and lowerable, according to one of Claims 1 to 5, characterized in that a member (58) of an installation profile (50) of the support column (10), which extends parallel to the locking bar (45), exhibits a guide slot (48) provided substantially parallel to the column axis and having a guide step (52) facing the pivot axis (14) and having a slot end (53) of the guide slot (48) offset towards the pivot axis (14) of the bracket arm (12) for a cap screw (46) of the locking bar (45), the member (58) of the installation profile (50) being located at an interval from an adjacent side member (15) of the support column (10) and penetrated by the guide pin (19) for the guide element (13) (Fig. 12).

7. Apparatus according to one of Claims 1 to 6, characterized in that the locking bar (45) carries, at least at its top end, a locking cam (44) projecting from it which is engaged by the retaining spring (23), and that the guide element (13$_h$) adjacent to the locking cam (44), preferably the top one, exhibits an edge recess (60) in which the locking cam (44) rests in the locked position of its locking bar (45).

8. Apparatus according to Claim 7, characterized in that the retaining spring (23) exhibits at least one formed part having an inner curved region (27$_i$) for the clamping retention of the locking cam (44), and that the retaining spring (23) exhibits at least one shaped part as an outer curved region (27$_a$) which engages into the pivot lever (30), possibly into a recess (38), the inner and outer curved regions (27$_a$, 27$_i$) forming an S shaped spring part (27).

9. Apparatus according to one of Claims 3 to 8, characterized in that the pivot lever (30) travels adjacently to the orbit of a stop pin (42) of the guide element, preferably of the top guide element (13$_h$), and a stop edge (34) of the pivot lever (30) is constructed as a stop for the stop pin (42), the retaining spring (23) with the pivot lever (30) being guidable out of the locked position again by the stop pin (42) moved in its orbit.

10. Apparatus according to one of Claims 3 to 9, characterized in that the pivot lever (30) is of L shaped construction in side elevation and its short member (33) retains the retaining spring (23), and that the short member (33) connects two long members (31) of the pivot lever (30) U shaped in cross section, the long member or members (31) of the pivot lever (30) abutting the stop pin (42) of the bracket arm (12) occupying the supporting position, preferably the top bracket arm, in the locked position of the pivot lever (30).

11. Apparatus according to one of Claims 3 to 10, characterized in that pivot lever (30) and/or retaining spring (24) exhibit stop elements (34 and/or 28) which abut one of the insides (35) of the U profile (16) of the support column (10) in the rest position of the locking device.

**Revendications**

1. Dispositif pour maintenir et transporter des pièces formées (11), notamment des tôles de carrosserie dans l'industrie automobile, comportant, prévus les uns au-dessus des autres sur une colonne-support (10), des bras en porte à faux (12) appartenant à des corps-guides (13, 13$_h$) qui sont traversés chacun par un axe de pivotement sensiblement horizontal (14) et dont les bras en porte à faux peuvent être déplacés, chacun par pivotement autour de cet axe, d'une position de repos à une position porteuse dans laquelle leurs corps-guides s'appliquent contre une butée (19), notamment une butée du genre tige, prévue à distance de l'axe de pivotement, caractérisé par le fait que les corps-guides (13), du genre disque, présentent chacun une arête de butée qui, dans la position de verrouillage, sert de contre-butée (55) pour l'arête y applicable (54) d'une barrette de verrou (45) agencée de façon à pouvoir être déplacée de manière limitée, sensiblement en direction radiale par rapport à l'axe de pivotement (14), et constituant une partie d'un dispositif d'arrêtoir, et par le fait qu'à la barrette de verrou (45) est conjugué un ressort de maintien (23) qui est articulé en une extrémité, constitue une partie d'un dispositif d'arrêtoir et qui, lors de la rotation du corps-guide (13, 13$_h$) voisin de lui, peut être entraîné autour de l'axe de pivotement (14), la barrette de verrou (45) pouvant être amenée à sa position de verrouillage.

2. Dispositif selon revendication 1, caractérisé par le fait que, dans la position porteuse du bras en porte à faux (12), des bras (25, 26) du ressort de maintien (23) sont situés par-dessus la surface portante (62) de ce bras en porte à faux et chargent une pièce de montage (11) y reposant éventuellement (figure 5).

3. Dispositif selon revendication 1 ou 2, caractérisé par le fait qu'au ressort de maintien (23) est conjugué un levier pivotant (30) qui peut être guidé autour d'un axe d'articulation, de préférence autour d'une broche de guidage (19) formant la butée pour le corps-guide (13) et qui est lié au ressort de maintien (23), par le fait que le ressort de maintien (23) est muni d'au moins un bras (22) qui est fixe en un autre point de pivotement de la colonne-support (10), de préférence sur la broche de guidage (19) au-dessus de l'axe d'articulation du levier d'articulation (30), par le fait qu'au bras pivotant (22) du ressort se raccorde une portion de ressort ayant, en vue latérale, une forme en U, son autre partie étant, vue en plan, une anse (24) en forme de U, l'axe médian (A) de l'anse (24) du ressort étant l'axe de symétrie du ressort de maintien (23), et par le fait que la portion de ressort ayant, en vue latérale, une forme en U, est placée par-dessus le bras en porte à faux (12), lorsque celui-ci est à sa position porteuse, et présente un bras latéral (25) incliné par rapport à la colonne-support (10).

4. Dispositif selon l'une des revendications 1 à 3, caractérisé par le fait qu'une paire de barrettes de verrou (45) avec les deux contre-butées associées (55) est agencée de part et d'autre du corps-guide (13, 13$_h$) du bras en porte à faux (12), prévu entre les barrettes de verrou (45), et par le fait que la barrette de verrou (45) passe, d'une part, entre chaque axe de pivotement (14) du bras en porte à faux (12) ainsi que, d'autre part, entre des broches de guidage (19) appartenant à la colonne-support (10), lesquelles sont parallèles et traversent chacune une fente de coulissement (20) du corps-guide (13) courbée autour de l'axe de pivotement (14).

5. Dispositif selon revendication 4, caractérisé par le fait que les contre-butées (55) pour l'arête (54) de la barrette de verrou (45) sont constituées par le côté extérieur d'un saillant latéral (56) de la tige d'axe située sur l'axe de pivotement (14).

6. Dispositif avec une fente de guidage pour la barrette de verrouillage, laquelle, dans sa position de verrouillage, peut être aussi bien abaissée que guidée en direction de la contre-butée, selon l'une des revendications 1 à 5, caractérisé par le fait qu'une aile (58) d'un profilé monté encastré (50), que comporte la colonne-support (10), est parallèle à la barrette de verrou (45) et présente, sensiblement parallèlement à l'axe de la colonne, une fente de guidage (48) avec un gradin de guidage (52) dirigé vers l'axe de pivotement (14) et avec une extrémité (53) décalée vers l'axe de pivotement (14) du bras en porte à faux (12), cette fente (48) étant destinée à guider un boulon-chapeau (46) de la barrette de verrou (45), l'aile (58) du profilé monté encastré (50) se trouvant à distance d'une aile latérale voisine (15) que comporte la colonne-support (10) et étant traversée par la broche de guidage (19) pour le corps-guide (13) (figure 12).

7. Dispositif selon l'une des revendications 1 à 6, caractérisé par le fait que la barrette de verrou (45) porte, au moins en son extrémité supérieure, un ergot (44) en saillie sur elle, qui est attaqué par le ressort de maintien (23), et par le fait que le corps-guide (13$_h$) voisin de l'ergot (44), de préférence le corps-guide supérieur, présente dans son bord un évidement (60) dans lequel l'ergot (44) repose dans la position de verrouillage de sa barrette de verrou (45).

8. Dispositif selon revendication 7, caractérisé par le fait que le ressort de maintien (23) présente au moins une partie façonnée avec une zone de courbure intérieure (27$_i$) pour maintenir par serrage l'ergot de verrouillage (44) et par le fait que le ressort de maintien (23) présente au moins une partie façonnée en tant que zone à courbure extérieure (27$_a$), laquelle s'engage dans le levier pivotant (30), éventuellement dans un évidement (38), les zones à courbure intérieure et extérieure (27$_a$, 27$_i$) formant une partie en forme de S (27) du ressort.

9. Dispositif selon l'une des revendications 3 à 8, caractérisé par le fait que le levier pivotant (30) se déplace au voisinage de la trajectoire d'une broche de butée (42) du corps-guide, de préférence du corps-guide le plus haut (13$_h$), et une arête de butée (34) du levier pivotant (30) est aménagée en tant que butée pour la broche de butée (42), le ressort de maintien (23) avec le levier pivotant (30) pouvant être ramené hors de la position de verrouillage par la broche de butée (42) déplacée sur sa trajectoire.

10. Dispositif selon l'une des revendications 3 à 9, caractérisé par le fait que le levier pivotant (30), vu en élévation latérale, est en forme de L, et sa branche courte (33) maintient le ressort de maintien (23), et par le fait que la branche courte (33) relie deux longues branches (31) du levier pivotant (30) qui, en coupe, est en forme de U, la ou les aile(s) longue(s) (31) du levier pivotant (30) étant, dans la position de verrouillage de ce levier, adjacente(s) à la broche de butée (42) du bras en porte à faux (12), de préférence le bras en porte à faux supérieur, se trouvant en position porteuse.

11. Dispositif selon l'une des revendications 3 à 10, caractérisé par le fait que le levier pivotant (30) et/ou le ressort de maintien (24) présentent des éléments de butée (34, 28) qui, dans la position de repos du dispositif de verrouillage, sont adjacents à l'un des côtés intérieurs (35) du profilé en U (16) de la colonne-support (10).

Fig.1

Fig.2

Fig.6

EP 0 192 613 B1

Fig.5

Fig.3

Fig. 4

Fig.8

Fig.7

Fig.9

Fig.10

Fig.11

Fig.12

Fig.13

Fig.14